# EUROPEAN PATENT SPECIFICATION

(11) **EP 3 711 255 B1**
(45) Date of publication and mention of the grant of the patent: **23.09.2026**
(21) Application number: 17803947.5
(22) Date of filing: 23.11.2017
(51) Int. Cl.: H04L 9/08, H04L 9/30

(54) **DEVICE, SYSTEM AND METHOD FOR SECURE DATA COMMUNICATION**
VORRICHTUNG, SYSTEM UND VERFAHREN ZUR SICHEREN DATENKOMMUNIKATION
DISPOSITIF, SYSTÈME ET PROCÉDÉ DE COMMUNICATION SÉCURISÉE DE DONNÉES

(43) Date of publication of application: 23.09.2020
(73) Proprietor: Huawei Technologies Co., Ltd., Longgang District Shenzhen, Guangdong 518129 (CN)
(72) Inventor: LI, Yong, 80992 Munich (DE)
(74) Representative: Roth, Sebastian
(86) International application number: PCT/EP2017/080255
(87) International publication number: WO 2019/101325

(56) References cited:
- LI YONG ET AL: "Strongly Secure One-Round Group Authenticated Key Exchange in the Standard Model", 20 November 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 122 - 138, ISBN: 978-3-540-74549-5, XP047044622
- FREIRE EDUARDA S ET AL: "Non-Interactive Key Exchange", 26 February 2013, MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, ISBN: 978-3-642-38287-1, ISSN: 0302-9743, XP047338495
- DAN BONEH ET AL: "Applications of Multilinear Forms to Cryptography", INTERNATIONAL ASSOCIATION FOR CRYPTOLOGIC RESEARCH,, vol. 20021013:220501, 14 October 2002 (2002-10-14), pages 1 - 20, XP061000368

## Description

### TECHNICAL FIELD

The present invention relates to a device for securely communicating data on a public network. Further, the present invention relates to a system including a plurality of such devices, and relates also to a method for securely communicating data on a public network. In particular, the present invention is concerned with enabling devices connected to the public network, like clients and servers, to negotiate a shared key in a non-interactive manner.

### BACKGROUND

Conventionally, a party wanting to securely transport data from a device over a public network faces a dilemma. The device may encrypt the data, before transporting it to one or more recipients. This has the advantage that the transmitted data is secure. However, a disadvantage is that a shared key negotiation process of the device with the recipients is required. Alternatively, the device leaves the data unencrypted. This has the advantage that no shared key negotiation process is needed. However, a disadvantage is that the transported data is not secure. In most cases, data encryption for secure communication is the preferred choice.

In this respect, Non-Interactive authenticated Key Exchange (NIKE) protocols are among the most important building blocks of secure network communication. These protocols enable devices (e.g. clients and servers connected to the same public network) to directly negotiate a shared key without an interactive process, i.e. without directly communicating with another in this respect. The shared key can then be used for securely exchanging data between the devices across the public network.

Different conventional solutions support certain key exchange operations between devices without an interactive process. However, these solutions are either not provably secure, if not assuming the existence of random oracles, or are not suitable for scaling the key exchange operation to a larger number of devices. Furthermore, the conventional solutions are either highly inefficient, or use complicated crypto primitives. Due to these various limitations, the conventional solutions cannot be adopted in some real-world scenarios.

FREIRE EDUARDA S ET AL, Non-Interactive Key Exchange, MEDICAL IMAGE COMPUTING AND COMPUTER-ASSISTED INTERVENTION - MICCAI 2015 discloses Non-interactive key exchange (NIKE).

DAN BONEH AND ALICE SILVERBERG, Applications of Multilinear Forms to Cryptography, Contemporary Mathematics discloses applications of multilinear forms to cryptography.

Li Y. and Zheng Y.: "Strongly Secure One-Round Group Authenticated Key Exchange in the Standard Model", SAT 2015, LNCS, Springer, pages 122-138, discloses a one-round tripartite authenticated key exchange (3AKE) protocol based on pairing groups that is provably secure in the so-called g-eCK model without random oracles.

### SUMMARY

In view of the above-mentioned disadvantages and limitations, the present invention aims to improve the conventional solutions. The present invention has thereby the object to provide a device, a system and a method for efficient and secure communication in a public network. In particular, a secure and efficient non-interactive shared key generation and exchange process is to be implemented within a scalable group of participants. Preferably, the process is carried out within a group of the devices. Thereby, the communication within the group should be secure without assuming the existence of random oracles.

The object of the present invention is achieved by the solutions provided in the appended claims. In the following, parts of the description and drawings referring to embodiments which are not covered by the claims are not presented as embodiments of the invention, but as examples useful for understanding the invention

The present disclosure is defined by a device for securely communicating data on a public network according to independent claim 1, a system for securely communicating data on a public network according to independent claim 10, a method for securely communicating data on a public network according to independent claim 13, and a computer program according to independent claim 14.

A first aspect of the present invention provides a device for securely communicating data on a public network, wherein the device is a participant in a group of n participants, a participant preferably being a server or a client connected to the public network, and *n* being a natural number, wherein n >2. The device is configured to compute a key pair including a secret key and a public key based on a cryptographic function received from a system administrator, and the device is configured to compute a shared key based on its secret key, the public keys of all participants of the group, and an n multilinear map received from the system administrator. The cryptographic function and the n multilinear map are included in a system parameter variable, and the system parameter variable includes further a set of n random values, a first random element and/or a second random element.

The device can negotiate the shared key with the other participants of the group - which are preferably also devices according to the first aspect of the invention - without an interactive process, i.e. without directly communicating in this respect with the other participants. To this end, the device utilizes the cryptographic function and the n multilinear map function, which is advantageously a more generic cryptographic primitive than used in some conventional solutions. The device of the first aspect supports in particular a scalable non-interactive group key exchange process, i.e. the size of the group of participants is scalable when using devices of the first aspect. The size of the group of participants can even be dynamically adjusted. Specifically, the device can communicate provably secure with the other participants of the group, even without assuming the existence of random oracles (i.e. secure in the standard model). Notably, the communication of the device with the other participants of the group requires no indistinguishable obfuscator to be secure. Additionally, no trusted third party is needed for the device to communicate securely within its group.

Via the system parameter variable, the information necessary for the secure communication can be efficiently received by the device, and also distributed among the participants of the group. Via the system parameter variable, it would also be possible to provide the device only the right to use the cryptographic function and/or *n* multilinear map - which may be located elsewhere, e.g. at the system administrator - without actually including the cryptographic function and/or *n* multilinear map itself in the system parameter variable. This could reduce signaling overhead.

An n multilinear map is defined, for instance, in "Dan Boneh and Alice Silverberg, Applications of multilinear forms to cryptography, 2002". In particular an *n* multilinear map may be defined as follows. Assuming a sequence of groups 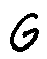 = ( 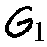 ... 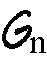 ), a map nMAP: 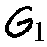 x ... x 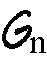 → 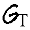 is considered an *n* multilinear map, if
1. 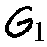 ... 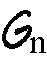 and 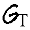 are groups of the same order.
2. If *x*₁, *..., xₙ* ∈ Z*ₚ*, *X*₁, ... , *Xₙ* ∈ G₁ and *i* = 1*...n,* then nMAP $\left({X}_{1}^{{x}_{1}}…{X}_{n}^{{x}_{n}}\right) = nMAP \left(\left({X}_{1}…{X}_{n}\right){\prod }_{i = 1}^{x} {x}_{i}\right.$ . Where Z is a set of *prime* order *p*.
3. If *gᵢ* ∈ G*ᵢ* is a generator of G*ᵢ*, then nMAP( *g*₁ ... *gₙ*) is a generator of 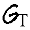 , wherein i = 1*...n.*

In an implementation form of the first aspect, the cryptographic function is a chameleon hash function.

A chameleon hash function is a trapdoor one-way hash function. That means, without knowledge of the associated trapdoor, the chameleon hash function is resistant to the computation of pre-images and of collisions. However, the collisions can be efficiently computed with the trapdoor information. A chameleon hash function is thus particularly secure, and accordingly preferred.

In a further implementation form of the first aspect, the system parameter variable includes at least the set of *n* random values, and the device is further configured to compute its public key based further on the set of *n* random values.

This randomizes the public key computation of the device, and thus makes the communication of the device with the other participants more secure.

In a further implementation form of the first aspect, the system parameter variable includes at least the first random element, and the device is further configured to compute the shared key based further on the first random element.

This randomizes the shared key computation of the device, and thus makes the communication of the device with the other participants more secure.

In a further implementation form of the first aspect, the system parameter variable includes at least the second random element, and the device is further configured to compute the shared key based further on the second random element, if *n* is smaller than an upper limit *m* for the participants in the group of participants, *m* being a natural number.

The second random element can be used by the device as a padding in the generation of the shared key. The padding is provided for achieving scalability of the group of participants, while maintaining the security of the communication of the device.

In a further implementation form of the first aspect, the device is configured to use its computed shared key to encrypt data, before communicating the encrypted data on the public network to one or more other participants of the group.

In a further implementation form of the first aspect, the device is configured to use its computed shared key to decrypt data received on the public network from another participant.

Accordingly, a secure communication of the device with the other participants of the group via the public network is enabled.

In a further implementation form of the first aspect, the device is registered with the system administrator with an identity that is unique in the group of participants.

Only registered devices receive the system parameter variable, particularly the cryptographic function and the n multilinear map, and can thus compute the shared key. Therefore, preferably only registered devices form the participants of a group. A non-registered attacker is unable to generate the shared key, is thus unable to communicate data to the participants of the group, and is also unable to decrypt data encrypted and transmitted by the device.

In a further implementation form of the first aspect, the device is configured to compute the shared key based further on unique identities of all participants of the group.

Within the group of the device, each participant is uniquely identified. Nevertheless, the device may belong to several communication groups communicating in the public network. The communication of the device is made even more secure in this way.

A second aspect of the present invention provides a system for securely communicating data on a public network, the system comprising a group of *n* participants, each participant being preferably a server or a client connected to the public network, and *n* being a natural number, where *n* > 2, and a system administrator, wherein each participant is configured to compute a key pair including a secret key and a public key based on a cryptographic function provided by the system administrator to each participant of the group, and wherein each participant is configured to compute a shared key based on its secret key, the public keys of all participants of the group, and an *n* multilinear map provided by the system administrator to each participant of the group. The cryptographic function and the n multilinear map are included in a system parameter variable, and the system parameter variable includes further a set of n random values, a first random element and/or a second random element.

In an implementation form of the second aspect, the cryptographic function is a chameleon hash function.

In a further implementation form of the second aspect, the system administrator is configured to provide the cryptographic function and the *n* multilinear map to each participant of the group included in a system parameter variable, and the system parameter variable includes further a set of *n* random values, a first random element and/or a second random element.

In a further implementation form of the second aspect, the system parameter variable includes at least the set of *n* random values, and each participant is further configured to compute its public key based further on the set of *n* random values.

In a further implementation form of the second aspect, the system parameter variable includes at least the first random element, and each participant is further configured to compute the shared key based further on the first random element.

In a further implementation form of the second aspect, the system administrator is configured to set an upper limit *m* for the participants in the group of participants, *m* being a natural number.

The setting of the group size upper limit by the system administrator supports the efficiency of the system.

In a further implementation form of the second aspect, the system parameter variable includes at least the second random element, and each participant is further configured to compute the shared key based further on the second random element, if *n* is smaller than *m*.

In a further implementation form of the second aspect, each participant is configured to use its computed shared key to encrypt data, before communicating the encrypted data on the public network to one or more other participants of the group.

In a further implementation form of the second aspect, each participant is configured to use its computed shared key to decrypt data received on the public network from another participant.

In a further implementation form of the second aspect, each participant is registered with the system administrator with an identity that is unique in the group of participants.

In a further implementation form of the second aspect, each participant is configured to compute the shared key based further on the unique identities of all participants of the group.

In a further implementation form of the second aspect, the system administrator is at least one server or at least one client connected to the public network, and preferably is at least one of the participants of the group.

Thus, the group of participants may be self-administrated. This ensures that only registered clients and servers participate in the process carried out by the system.

The system of the second aspect and its implementation forms provide the advantages and effects as described for the device of the first aspect and its respective implementation forms.

A third aspect of the present invention provides a method for securely communicating data on a public network, the method comprising computing, by a device being a participant of a group of *n* participants, a key pair including a secret key and a public key based on a cryptographic function received from a system administrator, a participant preferably being a server or a client connected to the public network, and *n* being a natural number, where n >2, and computing, by the device, a shared key based on its secret key, the public keys of all participants of the group, and an *n* multilinear map received from the system administrator. The cryptographic function and the n multilinear map are included in a system parameter variable, and the system parameter variable includes further a set of n random values, a first random element and/or a second random element

In an implementation form of the third aspect, the cryptographic function is a chameleon hash function.

In a further implementation form of the third aspect, the system parameter variable includes at least the set of *n* random values, and the method comprises computing the public key based further on the set of *n* random values.

In a further implementation form of the third aspect, the system parameter variable includes at least the first random element, and the method comprises computing the shared key based further on the first random element.

In a further implementation form of the third aspect, the system parameter variable includes at least the second random element, and the method comprises computing the shared key based further on the second random element, if *n* is smaller than an upper limit *m* for the participants in the group of participants, *m* being a natural number.

In a further implementation form of the third aspect, the method comprises using the computed shared key to encrypt data, before communicating the encrypted data on the public network to one or more participants of the group.

In a further implementation form of the third aspect, the method comprises using the computed shared key to decrypt data received on the public network from a participant.

In a further implementation form of the third aspect, the method comprises registering with an identity that is unique in the group of participants.

In a further implementation form of the third aspect, the method comprises computing the shared key based further on the unique identities of all participants of the group.

The method of the third aspect and its implementation forms provide the advantages and effects described above for the device and system of the first and second aspect, respectively, and their implementation forms.

A fourth aspect of the present invention provides a computer program product comprising a program code for controlling a device according to the first aspect and its implementation forms, or for controlling a system according to the second aspect and its implementation forms, or for performing, when running on a computer, the method according to the third aspect and its implementation forms.

Accordingly, the computer program product of the fourth aspect achieves the advantages as described for the system of the first aspect or as described for the method of the second aspect and their respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
FIG. 1 shows a device and a system according to embodiments of the present invention.
FIG. 2 shows a system according to an embodiment of the present invention.
FIG. 3 shows a method according to an embodiment of the present invention.
FIG. 4 shows a flow chart of steps in a method according to an embodiment of the present invention.

### DETAILED DESCRIPTION OF EMBODIMENTS

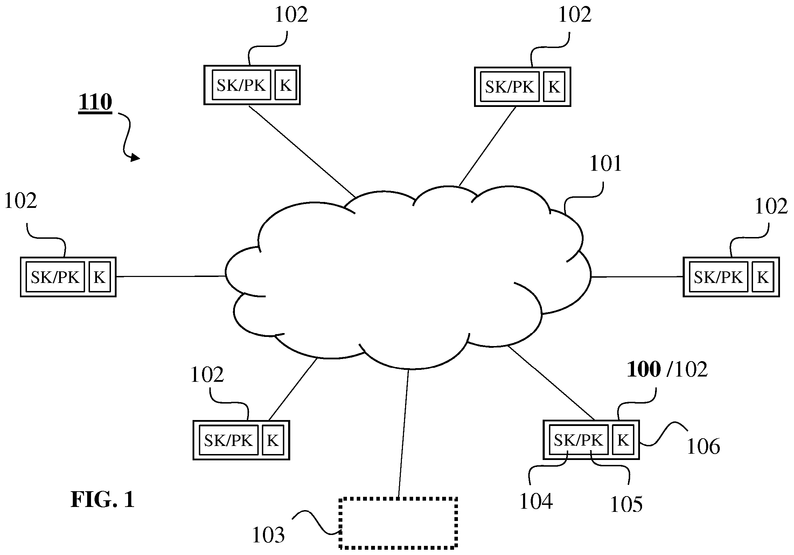

FIG. 1 shows a device 100 according to an embodiment of the present invention. The device 100 is configured to securely communicate data on a public network 101. The device 100 is connected to the public network 101, for instance, via a wired or wireless communication channel. The device 100 is thereby a participant 102 in a group of *n* participants 102, wherein *n* is a natural number. The other *n-1* participants 102 of the group are also connected to the public network 101. Advantageously, each participant 102 of the group may be a device 100 according to an embodiment of the present invention. Moreover, each participant 102 of the group is preferably a server or a client.

The device 100 is configured to compute a key pair (SK/PK) including a secret key (SK) 104 and a public key (PK) 105 based on a cryptographic function 400, which is preferably a chameleon hash function, received by the device 100 from a system administrator 103. Further, the device 100 is configured to compute a shared key 106 based on its secret key 104, the public keys 105 of all *n* participants 102 of the group, and an *n* multilinear map 401 received by the device 100 from the system administrator 103.

FIG. 1 also shows a system 110 according to an embodiment of the present invention. The system 110 is configured to enable a secure communication of data over the public network 101. The system 110 comprises the plurality of the *n* participants 102, and the system administrator 103. The system administrator 103 is also connected to the public network 101, and may be a server or client, preferably is at least one participant 102 of the group. The public network 101 is not part of the system 110.

In the system 110, each participant 102 of the group is configured to compute, and then preferably store internally, a key pair including the participant's secret key 104 and the participant's public key 105. That is, each participant 102 calculates a different secret key 104 and different public keys 105 than the other participants 102. The calculation of the key pair for each participant 102 bases on the cryptographic function 400 distributed by the system administrator 103 to each participant 102 of the group.

Further, each participant 102 is configured to compute the shared key (K) 106 based on its secret key 104, the public keys 105 of all the *n* participants 102 of the group, and the *n* multilinear map 401, which is provided by the system administrator 103 to each participant 102 of the group. Accordingly, each participant 102 of the group is configured to obtain the public keys 105 of all other *n-1* participants 102 of the group.

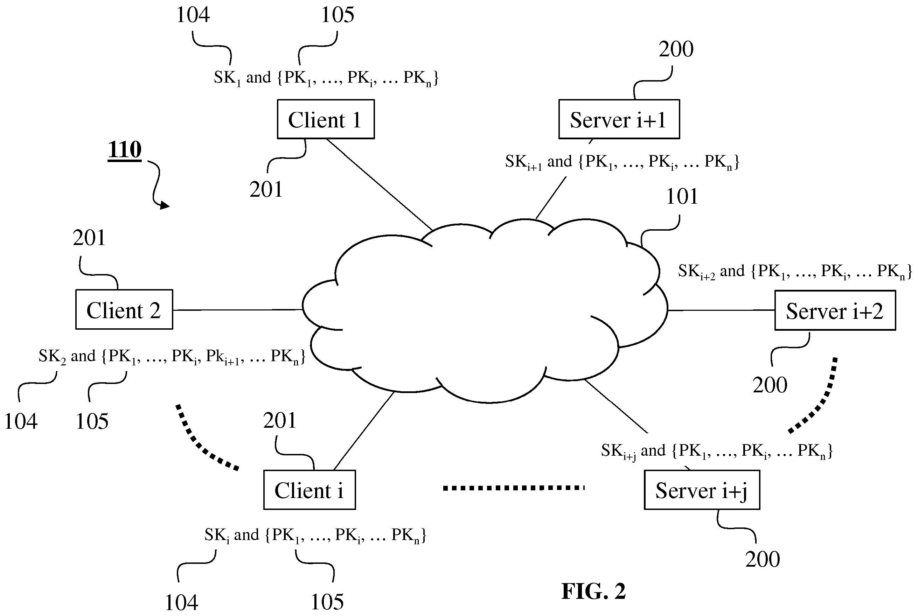

FIG. 2 shows a system 110 according to an embodiment of the present invention, which builds on the system 110 shown in FIG. 1. Identical elements of the systems 110 in FIG. 1 and FIG. 2, respectively, are labelled with the same reference signs and have the same functions. In particular, FIG. 2 shows again a system 110 with *n* participants 102. These *n* participants 102 include here exemplarily *i* clients 201 and *j* servers 200, wherein *n=i+j.* Each participant 102 may be a device 100 according to an embodiment of the present invention. The system administrator 103 of the system 110 is not explicitly shown in FIG. 2. However, the system administrator 103 may again be an additional server, client or other entity that is connected to the public network 101, i.e. one that does not belong to the group of the n participants 102, or may be one of the clients 201 and servers 200 of the group.

In the system 110, for instance, the clients 201 want to negotiate a shared key 106 with the servers 200, in order to use this shared key 106 to protect their transmitted messages. Alternatively, the servers 200 want to negotiate a shared key 106 with the clients 201. Further, it is assumed that the servers 200 and clients 201 communicate through the public network 101 (e.g., the internet), such that an adversary could in principle eavesdrop on and/or tamper with any communication channel between any client 201 and server 200. The adversary may also compromise a client 201, a server 200, any subset of clients 201, or any collusion of these participants 102.

Each participant 102 (with index i) generates for itself the key pair (SKᵢ/PKᵢ) including the participant's secret key (SKᵢ) 104 and the participant's public key (PKᵢ) 105, preferably according to a system parameter variable. This system parameter variable is preferably provided by the system administrator 103 to each participant 102 of the group, and includes at least the cryptographic function 400 and the n multilinear map 401. As mentioned above, each participant 102 is then configured to calculate the key pair at least based on the cryptographic function 400. Preferably, the system parameter variable includes additionally a set of *n* random values, a first random element and/or a second random element. Each participant 102 may thus be configured to compute its public key 105 based further on the set of *n* random values, i.e. based on the cryptographic function 400 and the set of *n* random values.

As mentioned above, each participant 102 is configured to calculate a shared key 106 at least based on the public keys 105 of all participants 102 of the group, and the *n* multilinear map 401 received preferably via the system parameter variable. That is, each participant 102 is configured to obtain the public keys 105 of all other group participants 102. As indicated in FIG. 2, this means that e.g. a client 201 with index *i* obtains, and preferably stores internally, (SKᵢ, {PK₁...PKₙ}). Each participant 102 may be further configured to compute the shared key 106 based on the *n* multilinear map and the first random element received via the system parameter variable. Furthermore, the system administrator 103 may be configured to set an upper limit *m* for the participants 102 in the group, wherein *m* is a natural number. In case that *n<m,* each participant 102 may be configured to compute the shared key 106 based on the *n* multilinear map and the second random element received via the system parameter variable, or even based on the *n* multilinear map, the first random element and the second random element.

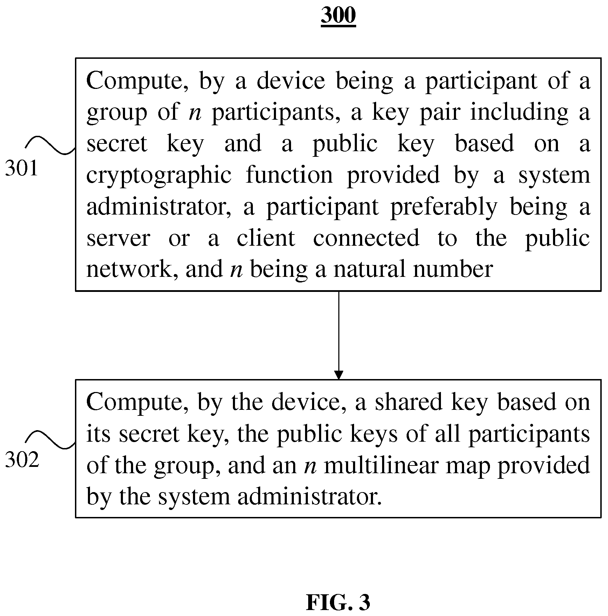

FIG. 3 shows a method 300 according to an embodiment of the present invention. The method 300 can be used to securely communicate data on a public network 101. The method 300 may be carried out by the device 100 according to an embodiment of the present invention as presented in FIG. 1.

The method 300 comprises a first step 301 of computing, by a device 100 being a participant 102 of a group of *n* participants 102, a key pair including a secret key 104 and a public key 105 based on a cryptographic function 400 provided by a system administrator 103. Thereby, a participant 102 is preferably a server 200 or a client 201 connected to the public network 101. Further, *n* is a natural number. The method 300 also includes a step 302 of computing, by the device 100, a shared key 106 based on its secret key 104, the public keys 105 of all participants 102 of the group, and an *n* multilinear map provided by the system administrator 103.

Further, another method 400 according to an embodiment of the present invention is now described, and is for securely communicating data on a public network 101. This method 400 may be carried out by the system 110 presented in FIG. 1 or in FIG. 2, and is similar to the method 300 carried out by the device 100.

In particular, the method 400 includes a step 401 of computing, by each participant 102 of a group of *n* participants 102, a key pair including a secret key 104 and a public key 105 based on a cryptographic function 400 provided by a system administrator 103 to each participant 102 of the group. Each participant 102 is thereby preferably a server 200 or a client 201 connected to the public network 101, and *n* is a natural number. The method 400 further includes a step 402 of computing, by each participant 102 of the group, a shared key 106 based on its secret key 104, the public keys 105 of all participants 102 of the group, and an *n* multilinear map 401 provided by the system administrator 103 to each participant 102 of the group.

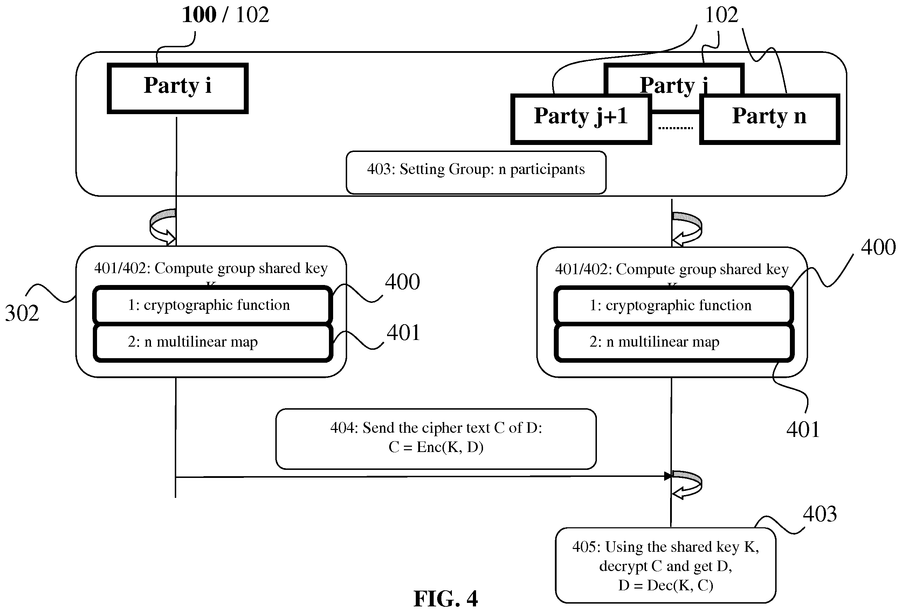

Fig. 4 shows a flow chart of several steps included in a method 400 according to an embodiment of the present invention, which builds on the above described method 400. The steps shown in FIG. 4 may be carried out by a system 110 of *n* participants 102 (here the participants 102 are labelled as parties).

In a step 403, a group size of the group of participants 102 is set to an upper limit of *n* participants 102. This may be done by the system administrator 103, which may be at least one of the participants 102 of the group.

In a step 401/402 each participant 102 utilizes the public keys 105 of all the participants 102 in the group, and generates the shared key (K) 106 without an interactive process between the participants 102. In particular, first a cryptographic function 104, e.g. a Chameleon Hash Function, is used by each participant 102 to compute in a step 401 its own secret key 104 and public key 105, respectively. Then, an *n* multilinear map 401 is used in a step 402 to calculate the shared key 106 based on all the public keys 105 in the group and the n multilinear map. Notably, for a participant 102 being a device 100 according to an embodiment of the present invention, the steps 401 and 402 correspond to the steps 301 and 302 shown in FIG. 3.

In a step 404, a participant 102 (here party i, which is preferably a device 100 according to an embodiment of the present invention) uses its computed shared key K 106 to encrypt data D, and then communicate 402 the encrypted data, i.e. the cipher text C of D, wherein C=Enc(K, D), on the public network 101 to one or more other participants 102 (here the parties j, j+1,..., n) of the group.

In a step 405, the receiving participants 102 (here the parties j, j+1,..., n) of the group each use their computed shared key 106 to decrypt 403 the encrypted data C received on the public network 101 from the sending participant 102 (here party i), in order to obtain the data D. That is, to obtain the plain text D of C, wherein D=Dec(K, C).

Of note, it is preferred that decryption of encrypted data exchanged within a group is only possible for an authenticated (registered) participant 102 of the group. Therefore, each participant 102 is preferably registered, for instance, with the system administrator 103. In particular, each participant 102 may be registered and authenticated with an identity that is unique for the participant 102 in the group of participants 102. In this case, preferably each participant 102 is configured to compute the shared key 106 based further on the unique identities of all participants 102 of the group. That is, each participant 102 is configured to compute the shared key 106 at least based on the public keys 105 of all participants 102 of the group, the unique identities of all participants 102 of the group, and the *n* multilinear map 401.

In summary, the present invention thus presents a device 100, a system 110, and methods 300 and 400, which implement a secure but scalable non-interactive shared key exchange process.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Further, the detailed process includes a group shared-key generation phase based on a shared-key generation algorithm $GNIKE . SKG \left({sk}_{{ID}_{{\hat{A}}_{i}}}, {ID}_{{\hat{A}}_{i}}, {GPK}_{{\hat{A}}_{i}}\right)$. That is, upon input of a secret key ${sk}_{{ID}_{{\hat{A}}_{i}}}$ and an identity ID*_{Â}_{ᵢ}* of a participant *Âᵢ* of the group of participants 102, along with a set of the public key parameters *GPK_{Â}_{ᵢ}* the algorithm GNIKE.SKG is executed among the *n* participants *Â*₁ ... *Âₙ* of the group of participants 102 as follows.

Upon activating a new instance with participants *Â*₁ ... *Âₙ,* a participant *Âᵢ* first checks all identities of the participants 102 in the group, i.e. for all *Âᵢ, Âⱼ* (*i, j* ∈ [*n**]): *ID_{Âᵢ}* ≠ *ID_{Â}_{ⱼ}.* The identity must be unique within each group domain. If so, *Âᵢ* computes *t_{Â}_{ⱼ}* = CHAM.H_{CHAM.pk} (*Z_{Âⱼ}* ∥ ID*_{Â}_{ⱼ},r_{Â}ⱼ*) and ${Y}_{{\hat{A}}_{j}} : = \left({u}_{0}{u}_{1}^{{\left({t}_{{\hat{A}}_{j}}\right)}^{1}}{u}_{2}^{{\left({t}_{{\hat{A}}_{j}}\right)}^{2}}…{u}_{n}^{{\left({t}_{{\hat{A}}_{j}}\right)}^{n}}\right)$, wherein *j* ∈ {1, *... , i -* 1, *i +* 1, *... , n**}.

Then, if nMAP(*Y_{Â}_{ⱼ}*, *Z_{Â}_{ⱼ}, g,* ..., *g*) = nMAP(*X_{Â}_{ⱼ} g,* ..., *g*) and *n*=n,* the participant *Âᵢ* of the group accepts and computes the shared key (K) 106 as follows. ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$

If nMAP(*Y_{Â}_{ⱼ}*, *Z_{Â}ⱼ*, *g,* ..., *g*) = nMAP(*X_{Âⱼ}*, *g,* ..., *g*) and 2 ≤ *n* ≤n,* the participant *Âᵢ* of the group adds (*n-n**)Φ padding to the generation equation of the shared key 106 (i.e. nMAP), and accordingly computes the shared key (K) 106 as follows. ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}}, Φ,…, Φ,S\right)}^{{sk}_{{ID}_{{\hat{A}}_{i}}}}$

Otherwise reject.

Finally, the detailed process includes an encryption/decryption phase of the data D. In particular, each participant 102 of the group can perform the encryption of the data D, and send the corresponding cipher text C to any other participants 102 of the group. Thereby, C = Enc(K, D). K is the shared key. Moreover each group participant 102 can decrypt the cipher text C to obtain the plain text data D, wherein D = Dec(K, C).

In summary, the present invention thus presents a device 100, a system 110, and methods 300 and 400, which implement a secure but scalable non-interactive shared key exchange process.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100) for securely communicating data on a public network (101), wherein
the device (100) is a participant (102) in a group of *n* participants (102), a participant (102) preferably being a server or a client connected to the public network (101), and *n* being a natural number, wherein *n* > 2,
the device (100) is configured to compute a key pair including a secret key (104) and a public key (105) based on a cryptographic function (400) received from a system administrator (103), and
the device (100) is configured to compute a shared key (106) based on its secret key (104), the public keys (105) of all participants (102) of the group, and an *n* multilinear map nMAP (401) received from the system administrator (103);
wherein:
the cryptographic function (400) and the *n* multilinear map (401) are included in a system parameter variable,
the system parameter variable includes further a set of *n* random values, a first random element S and a second random element Φ;
wherein the device (100) is further configured to compute its public key (105) based further on the set of *n* random values; and
wherein the device (100) is further configured to compute the key pair based on the cryptographic function (400) by obtaining a long-term key pair for a participant *Âᵢ* of the group of participants (102) by performing a key generation algorithm GNIKE.KGen(*pms,* ID*_{Â}ᵢ*), wherein *pms* is the system parameter variable that further comprises the *n* multilinear map (401), the set of *n* random values, the first random element, the second random element and the cryptographic function (400), and wherein ID*_{Âᵢ}* is an identity of the participant *Âᵢ*; and
wherein the device (100) is further configured to compute the shared key (106) as ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$ for *n*=n,* or as ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}}, Φ,…, Φ,S\right)}^{{sk}_{{ID}_{{\hat{A}}_{i}}}}$ for 2<n*<n, wherein ${sk}_{{ID}_{{\hat{A}}_{i}}}$ is the secret key (104) for the participant *Âᵢ* indicated by the identity ID*_{Â}ᵢ* of the participant *Âᵢ* of the group of participants (102), ${Z}_{{\hat{A}}_{i}} : = {g}^{{α}_{{\hat{A}}_{i}}}$, wherein ${α}_{{\hat{A}}_{i}} {←}^{$} {ℤ}_{p}^{∗}$, g is a generator of a group G, the n multilinear map nMAP is defined over Gⁿ and nMAP(g, .., g) is the generator of a group of the same order as G.

2. Device (100) according to claim 1, wherein
the cryptographic function (400) is a chameleon hash function.

3. Device (100) according to claim 1, wherein
the system parameter variable includes at least the first random element, and
the device (100) is further configured to compute the shared key (106) based further on the first random element.

4. Device (100) according to any one of claims 1 to 3, wherein
the system parameter variable includes at least the second random element, and
the device (100) is further configured to compute the shared key (106) based further on the second random element, if *n* is smaller than an upper limit *m* for the participants (102) in the group of participants (102), *m* being a natural number.

5. Device (100) according to one of the claims 1 to 4, wherein
the device (100) is configured to use its computed shared key (106) to encrypt data, before communicating (402) the encrypted data on the public network (101) to one or more other participants (102) of the group.

6. Device (100) according to one of the claims 1 to 5, wherein
the device (100) is configured to use its computed shared key (106) to decrypt (403) data received on the public network (101) from another participant (102).

7. Device (100) according to one of the claims 1 to 6, wherein
the device (100) is registered with the system administrator (103) with an identity that is unique in the group of participants (102).

8. Device (100) according to one of the claims 1 to 7, wherein
the device (100) is configured to compute the shared key (106) based further on unique identities of all participants (102) of the group.

9. System (110) for securely communicating data on a public network (101), the system (110) comprising
a group of *n* participants (102), each participant (102) preferably being a server or a client connected to the public network (101), and *n* being a natural number, wherein *n >* 2, and
a system administrator (103),
wherein each participant (102) is configured to compute a key pair including a secret key (104) and a public key (105) based on a cryptographic function (400) provided by the system administrator (103) to each participant (102) of the group, and
wherein each participant (102) is configured to compute a shared key (106) based on its secret key (104), the public keys (105) of all participants (102) of the group, and an *n* multilinear map nMAP (401) provided by the system administrator (103) to each participant (102) of the group;
wherein:
the cryptographic function (400) and the *n* multilinear map (401) are included in a system parameter variable,
the system parameter variable includes further a set of *n* random values, a first random element S and a second random element Φ;
wherein each participant (102) is further configured to compute its public key (105) based further on the set of *n* random values;
wherein each participant (102) is further configured to compute the key pair based on the cryptographic function (400) by obtaining a long-term key pair by performing a key generation algorithm GNIKE.KGen(*pms, ID_{Â}_{ᵢ}*), wherein *pms* is the system parameter variable that further comprises the *n* multilinear map nMAP (401), the set of *n* random values, the first random element, the second random element and the cryptographic function (400), and wherein ID*_{Â}ᵢ* is an identity of the participant *Âᵢ*; and
wherein each participant (102) is further configured to compute a shared key (106) as ${K}_{{ID}_{{\hat{A}}_{i} , … , n *}} = nMAP \left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right) {sk}_{{ID}_{{\hat{A}}_{i}}}$ for *n*=n,* or as ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ for 2<n*<n, wherein ${sk}_{{ID}_{{\hat{A}}_{i}}}$ is the secret key (104) for the participant *Âᵢ* indicated by the identity ID*_{Âᵢ}*, ${Z}_{{\hat{A}}_{i}} : = {g}^{{α}_{{\hat{A}}_{i}}} , {α}_{{\hat{A}}_{i}} {←}^{$} {ℤ}_{p}^{∗}$ , g is a generator of a group G, the n multilinear map nMAP is defined over Gⁿ and nMAP(g, .., g) is the generator of a group of the same order as G.

10. System (110) according to claim 9, wherein
the system administrator (103) is at least one server (201) or at least one client (200) connected to the public network (101), and preferably is at least one of the participants (102) of the group.

11. System (110) according to claim 9 or 10, wherein
the system administrator (103) is configured to set an upper limit *m* for the participants (102) in the group of participants (102), *m* being a natural number.

12. Method (300) for securely communicating data on a public network (101), the method (300) comprising
computing (301), by a device (100) being a participant (102) of a group of *n* participants (102), a key pair including a secret key (104) and a public key (105) based on a cryptographic function (400) received from a system administrator (103), a participant (102) preferably being a server or a client connected to the public network (101), and *n* being a natural number, wherein *n* > 2, and
computing (302), by the device (100), a shared key (106) based on its secret key (104), the public keys (105) of all participants (102) of the group, and an *n* multilinear map nMAP (401) received from the system administrator (103);
wherein:
the cryptographic function (400) and the *n* multilinear map nMAP (401) are included in a system parameter variable,
the system parameter variable includes further a set of *n* random values, a first random element S and a second random element Φ;
computing, by the device (100), its public key (105) based further on the set of *n* random values;
wherein computing, by the device (100) the key pair based on the cryptographic function (400) comprises: obtaining, by the device (100), a long-term key pair for a participant *Âᵢ* of the group of participants (102) by performing a key generation algorithm GNIKE.KGen(*pms,* ID*_{Â}ᵢ*), wherein *pms* is the system parameter variable that further comprises the *n* multilinear map nMAP (401), the set of *n* random values, the first random element, the second random element and the cryptographic function (400), and wherein ID*_{Â}ᵢ* is an identity of the participant *Âᵢ*; and
wherein computing (302), by the device (100), a shared key (106) based on its secret key (104), the public keys (105) of all participants (102) of the group, and an *n* multilinear map (401) received from the system administrator (103) comprises: computing, by the device (100), the shared key (106) as ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$ for *n*=n,* or as ${K}_{{ID}_{{\hat{A}}_{i} , … , n *}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ for 2<n*<n, wherein ${sk}_{{ID}_{{\hat{A}}_{i}}}$ is the secret key (104) for the participant *Âᵢ* indicated by the identity, ${Z}_{{\hat{A}}_{i}} : = {g}^{{α}_{{\hat{A}}_{i}}}$, wherein ${α}_{{\hat{A}}_{i}} {←}^{$} {ℤ}_{p}^{∗}$, g is a generator of a group G, the n multilinear map nMAP is defined over Gⁿ and nMAP(g, .., g) is the generator of a group of the same order as G.

13. Computer program product comprising instructions, which, when executed by a computer, cause the computer to carry out the steps of the method (300) of claim 12.

## Patentansprüche

1. Vorrichtung (100) zum sicheren Kommunizieren von Daten in einem öffentlichen Netz (101), wobei
die Vorrichtung (100) ein Teilnehmer (102) in einer Gruppe von *n* Teilnehmern (102) ist, ein Teilnehmer (102) bevorzugt ein Server oder ein Client ist, der mit dem öffentlichen Netz (101) verbunden ist, und *n* eine natürliche Zahl ist, wobei *n > 2*,
die Vorrichtung (100) konfiguriert ist, ein Schlüsselpaar, das einen geheimen Schlüssel (104) und einen öffentlichen Schlüssel (105) enthält, auf der Grundlage einer Kryptographiefunktion (400) zu berechnen, die von einem Systemadministrator (103) empfangen wurde, und
die Vorrichtung (100) konfiguriert ist, einen gemeinsam verwendeten Schlüssel (106) auf der Grundlage ihres geheimen Schlüssels (104), der öffentlichen Schlüssel (105) aller Teilnehmer (102) der Gruppe und einer *n*-multilinearen Abbildung nMAP (401), die vom Systemadministrator (103) empfangen wurde, zu berechnen; wobei
die Kryptographiefunktion (400) und die *n*-multilineare Abbildung (401) in einer Systemparametervariable enthalten sind,
die Systemparametervariable ferner einen Satz von *n* Zufallswerten, ein erstes Zufallselement S und ein zweites Zufallselement Φ enthält;
wobei die Vorrichtung (100) ferner konfiguriert ist, ihren öffentlichen Schlüssel (105) ferner auf der Grundlage des Satzes von *n* Zufallswerten zu berechnen; und
wobei die Vorrichtung (100) ferner konfiguriert ist, das Schlüsselpaar auf der Grundlage der Kryptographiefunktion (400) durch Erhalten eines Langzeitschlüsselpaars für einen Teilnehmer *Âᵢ* der Gruppe von Teilnehmern (102) durch Durchführen eines Schlüsselerzeugungsalgorithmus GNIKE. KGen(*pms*, ID*_{Â}_{ᵢ}*) zu berechnen, wobei *pms* die Systemparametervariable ist, die ferner die *n*-multilineare Abbildung (401), den Satz von *n* Zufallswerten, das erste Zufallselement, das zweite Zufallselement und die Kryptographiefunktion (400) umfasst, und wobei ID*_{Â}ᵢ* eine Identität des Teilnehmers *Âᵢ* ist; und
wobei die Vorrichtung (100) ferner konfiguriert ist, den gemeinsam verwendeten Schlüssel (106) als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$ für *n** = *n*, oder als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ für 2 < n* < n zu berechnen, wobei ${sk}_{{ID}_{{\hat{A}}_{i}}}$ der geheime Schlüssel (104) für den Teilnehmer *Âᵢ* ist, der durch die Identität *ID_{Â}_{ᵢ}* des Teilnehmers *Âᵢ* der Gruppe von Teilnehmern (102), ${Z}_{{}_{{\hat{A}}_{i}}} : = {g}^{{}_{{∝}_{{}_{{\hat{A}}_{i}}}}}$, angegeben ist, wobei ${∝}_{{\hat{A}}_{i}} {←}^{$} {Z}_{p}^{∗}$, g ein Generator einer Gruppe G ist, die n-multilineare Abbildung nMAP auf Gⁿ definiert ist und nMAP(g, .., g) der Generator einer Gruppe derselben Ordnung wie G ist.

2. Vorrichtung (100) nach Anspruch 1, wobei
die Kryptographiefunktion (400) eine Chamäleonstreuwertfunktion ist.

3. Vorrichtung (100) nach Anspruch 1, wobei
die Systemparametervariable mindestens das erste Zufallselement enthält und
die Vorrichtung (100) ferner konfiguriert ist, den gemeinsam verwendeten Schlüssel (106) ferner auf der Grundlage des ersten Zufallselements zu berechnen.

4. Vorrichtung (100) nach einem der Ansprüche 1 bis 3, wobei
die Systemparametervariable mindestens das zweite Zufallselement enthält und
die Vorrichtung (100) ferner konfiguriert ist, den gemeinsam verwendeten Schlüssel (106) ferner auf der Grundlage des zweiten Zufallselements zu berechnen, falls *n* kleiner als eine Obergrenze *m* für die Teilnehmer (102) in der Gruppe von Teilnehmern (102) ist, wobei *m* eine natürliche Zahl ist.

5. Vorrichtung (100) nach einem der Ansprüche 1 bis 4, wobei
die Vorrichtung (100) konfiguriert ist, ihren berechneten gemeinsam verwendeten Schlüssel (106) zu verwenden, um Daten zu verschlüsseln, bevor die verschlüsselten Daten im öffentlichen Netz (101) zu einem oder mehreren weiteren Teilnehmern (102) der Gruppe kommuniziert (402) werden.

6. Vorrichtung (100) nach einem der Ansprüche 1 bis 5, wobei
die Vorrichtung (100) konfiguriert ist, ihren berechneten gemeinsam verwendeten Schlüssel (106) zu verwenden, um Daten zu entschlüsseln (403), die im öffentlichen Netz (101) von einem weiteren Teilnehmer (102) empfangen wurden.

7. Vorrichtung (100) nach einem der Ansprüche 1 bis 6, wobei
die Vorrichtung (100) beim Systemadministrator (103) mit einer Identität registriert ist, die in der Gruppe von Teilnehmern (102) eindeutig ist.

8. Vorrichtung (100) nach einem der Ansprüche 1 bis 7, wobei
die Vorrichtung (100) konfiguriert ist, den gemeinsam verwendeten Schlüssel (106) ferner auf der Grundlage eindeutiger Identitäten aller Teilnehmer (102) der Gruppe zu berechnen.

9. System (110) zum sicheren Kommunizieren von Daten in einem öffentlichen Netz (101), wobei das System (110) Folgendes umfasst:
eine Gruppe von *n* Teilnehmern (102), wobei jeder Teilnehmer (102) bevorzugt ein Server oder ein Client ist, der mit dem öffentlichen Netz (101) verbunden ist, und *n* eine natürliche Zahl ist, wobei *n > 2*, und
einen Systemadministrator (103),
wobei jeder Teilnehmer (102) konfiguriert ist, ein Schlüsselpaar, das einen geheimen Schlüssel (104) und einen öffentlichen Schlüssel (105) enthält, auf der Grundlage einer Kryptographiefunktion (400) zu berechnen, die durch den Systemadministrator (103) für jeden Teilnehmer (102) der Gruppe bereitgestellt wird, und
wobei jeder Teilnehmer (102) konfiguriert ist, einen gemeinsam verwendeten Schlüssel (106) auf der Grundlage seines geheimen Schlüssels (104), der öffentlichen Schlüssel (105) aller Teilnehmer (102) der Gruppe und einer *n*-multilinearen Abbildung nMAP (401), die durch den Systemadministrator (103) für jeden Teilnehmer (102) der Gruppe bereitgestellt wird, zu berechnen; wobei
die Kryptographiefunktion (400) und die *n*-multilineare Abbildung (401) in einer Systemparametervariable enthalten sind,
die Systemparametervariable ferner einen Satz von *n* Zufallswerten, ein erstes Zufallselement S und ein zweites Zufallselement Φ enthält;
wobei jeder Teilnehmer (102) ferner konfiguriert ist, seinen öffentlichen Schlüssel (105) ferner auf der Grundlage des Satzes von *n* Zufallswerten zu berechnen;
wobei jeder Teilnehmer (102) ferner konfiguriert ist, das Schlüsselpaar auf der Grundlage der Kryptographiefunktion (400) durch Erhalten eines Langzeitschlüsselpaars durch Durchführen eines Schlüsselerzeugungsalgorithmus GNIKE. KGen(*pms*, ID*_{Â}_{ᵢ}*) zu berechnen, wobei *pms* die Systemparametervariable ist, die ferner die *n*-multilineare Abbildung nMAP (401), den Satz von *n* Zufallswerten, das erste Zufallselement, das zweite Zufallselement und die Kryptographiefunktion (400) umfasst, und wobei ID*_{Âᵢ}* eine Identität des Teilnehmers *Âᵢ* ist; und
wobei jeder Teilnehmer (102) ferner konfiguriert ist, einen gemeinsam verwendeten Schlüssel (106) als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$ für *n** = *n*, oder als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ für 2 < n* < n zu berechnen, wobei ${sk}_{{ID}_{{\hat{A}}_{i}}}$ der geheime Schlüssel (104) für den Teilnehmer *Âᵢ* ist, der durch die Identität ID*_{Âᵢ}*, ${Z}_{{}_{{\hat{A}}_{i}}} : = {g}^{{}_{{∝}_{{}_{{\hat{A}}_{i}}}}}$, angegeben ist, wobei ${∝}_{{\hat{A}}_{i}} {←}^{$} {Z}_{p}^{∗}$ , g ein Generator einer Gruppe G ist, die n-multilineare Abbildung nMAP auf Gⁿ definiert ist und nMAP(g, .., g) der Generator einer Gruppe derselben Ordnung wie G ist.

10. System (110) nach Anspruch 9, wobei
der Systemadministrator (103) mindestens ein Server (201) oder mindestens ein Client (200) ist, der mit dem öffentlichen Netz (101) verbunden ist, und bevorzugt mindestens einer der Teilnehmer (102) der Gruppe ist.

11. System (110) nach Anspruch 9 oder 10, wobei
der Systemadministrator (103) konfiguriert ist, eine Obergrenze *m* für die Teilnehmer (102) in der Gruppe von Teilnehmern (102) zu setzen, wobei *m* eine natürliche Zahl ist.

12. Verfahren (300) zum sicheren Kommunizieren von Daten in einem öffentlichen Netz (101), wobei das Verfahren (300) Folgendes umfasst:
Berechnen (301) durch eine Vorrichtung (100), die ein Teilnehmer (102) einer Gruppe von *n* Teilnehmern (102) ist, eines Schlüsselpaars, das einen geheimen Schlüssel (104) und einen öffentlichen Schlüssel (105) enthält, auf der Grundlage einer Kryptographiefunktion (400), die von einem Systemadministrator (103) empfangen wurde, wobei ein Teilnehmer (102) bevorzugt ein Server oder ein Client ist, der mit dem öffentlichen Netz (101) verbunden ist, und *n* eine natürliche Zahl ist, wobei *n > 2*, und
Berechnen (302) durch die Vorrichtung (100) eines gemeinsam verwendeten Schlüssels (106) auf der Grundlage ihres geheimen Schlüssels (104), der öffentlichen Schlüssel (105) aller Teilnehmer (102) der Gruppe und einer *n*-multilinearen Abbildung nMAP (401), die vom Systemadministrator (103) empfangen wurde; wobei die Kryptographiefunktion (400) und die *n*-multilineare Abbildung nMAP (401) in einer Systemparametervariable enthalten sind,
die Systemparametervariable ferner einen Satz von *n* Zufallswerten, ein erstes Zufallselement S und ein zweites Zufallselement Φ enthält;
das Berechnen durch die Vorrichtung (100) ihres öffentlichen Schlüssels (105) ferner den Satz von *n* Zufallswerten als Grundlage verwendet;
wobei das Berechnen durch die Vorrichtung (100) des Schlüsselpaars auf der Grundlage der Kryptographiefunktion (400) Folgendes umfasst: Erhalten durch die Vorrichtung (100) eines Langzeitschlüsselpaars für einen Teilnehmer *Âᵢ* der Gruppe von Teilnehmern (102) durch Durchführen eines Schlüsselerzeugungsalgorithmus GNIKE. KGen(*pms*, ID*_{Â}_{ᵢ}*), wobei *pms* die Systemparametervariable ist, die ferner die *n*-multilineare Abbildung nMAP (401), den Satz von *n* Zufallswerten, das erste Zufallselement, das zweite Zufallselement und die Kryptographiefunktion (400) umfasst, und ID*_{Â}ᵢ* eine Identität des Teilnehmers *Âᵢ* ist; und
wobei das Berechnen (302) durch die Vorrichtung (100) eines gemeinsam verwendeten Schlüssels (106) auf der Grundlage ihres geheimen Schlüssels (104), der öffentlichen Schlüssel (105) aller Teilnehmer (102) der Gruppe und einer *n-*multilinearen Abbildung (401), die vom Systemadministrator (103) empfangen wurde, Folgendes umfasst: Berechnen durch die Vorrichtung (100) des gemeinsam verwendeten Schlüssels (106) als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n} *},S\right)}^{{sk}_{{ID}_{{\hat{A}}_{i}}}}$ für *n** = *n,* oder als ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n} *},Φ,…,Φ,S\right)}^{{sk}_{{ID}_{{\hat{A}}_{i}}}}$ für 2 < n* < n, wobei ${sk}_{{ID}_{{\hat{A}}_{i}}}$ der geheime Schlüssel (104) für den Teilnehmer *Âᵢ* ist, der durch die Identität ${Z}_{{\hat{A}}_{i}} : = {g}^{{∝}_{{\hat{A}}_{i}}}$ angegeben ist, wobei ${∝}_{{\hat{A}}_{i}} {←}^{$} {Z}_{p}^{∗}$, g ein Generator einer Gruppe G ist, die n-multilineare Abbildung nMAP auf Gⁿ definiert ist und nMAP(g, .., g) der Generator einer Gruppe derselben Ordnung wie G ist.

13. Computerprogrammprodukt, das Befehle umfasst, die, wenn sie durch einen Computer ausgeführt werden, verursachen, dass der Computer die Schritte des Verfahrens (300) nach Anspruch 12 ausführt.

## Revendications

1. Dispositif (100) de communication sécurisée de données sur un réseau public (101), le dispositif (100) étant un participant (102) dans un groupe de *n* participants (102), un participant (102) étant de préférence un serveur ou un client connecté au réseau public (101), et *n* étant un entier naturel, où *n >* 2,
le dispositif (100) étant configuré pour calculer une paire de clés incluant une clé secrète (104) et une clé publique (105) sur la base d'une fonction cryptographique (400) reçue en provenance d'un administrateur (103) de système, et
le dispositif (100) étant configuré pour calculer une clé partagée (106) sur la base de sa clé secrète (104), des clés publiques (105) de tous les participants (102) du groupe, et d'une application *n*-multilinéaire nMAP (401) reçue en provenance de l'administrateur (103) de système ;
dans lequel :
la fonction cryptographique (400) et l'application *n*-multilinéaire (401) sont comprises dans une variable de paramètre de système,
la variable de paramètre de système comprend en outre un ensemble de *n* valeurs aléatoires, un premier élément aléatoire S et un second élément aléatoire Φ ;
le dispositif (100) étant en outre configuré pour calculer sa clé publique (105) sur la base en outre de l'ensemble de *n* valeurs aléatoires ; et
le dispositif (100) étant en outre configuré pour calculer la paire de clés sur la base de la fonction cryptographique (400) en obtenant une paire de clés à long terme pour un participant *Âᵢ* du groupe de participants (102) en exécutant un algorithme de génération de clés GNIKE.KGen(pms, ID*_{Â}ᵢ*), *pms* étant la variable de paramètre de système qui comporte en outre l'application *n*-multilinéaire (401), l'ensemble de *n* valeurs aléatoires, le premier élément aléatoire, le second élément aléatoire et la fonction cryptographique (400), et ID*_{Âi}* étant une identité du participant *Âᵢ* ; et
le dispositif (100) étant en outre configuré pour calculer la clé partagée (106) comme ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n} *},S\right)}^{{sk}_{{ID}_{{\hat{A}}_{i}}}}$ pour *n*=n,* ou comme ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n} *},Φ,…,Φ,S\right)}^{{sk}_{{ID}_{{\hat{A}}_{i}}}}$ pour 2<n*<n, ${sk}_{{ID}_{\hat{A}}}$ étant la clé secrète (104) pour le participant *Âᵢ* indiqué par l'identité ID*_{Â}ᵢ* du participant *Âᵢ* du groupe de participants (102), ${Z}_{{\hat{A}}_{i}} : = {g}^{{α}_{{\hat{A}}_{i}}} , {α}_{{\hat{A}}_{i}} {←}^{$} {Z}_{p}^{∗}$ g étant un générateur d'un groupe G, l'application *n*-multilinéaire nMAP étant définie sur Gⁿ et nMAP (g,..., g) étant le générateur d'un groupe du même ordre que G.

2. Dispositif (100) selon la revendication 1,
la fonction cryptographique (400) étant une fonction de hachage caméléon.

3. Dispositif (100) selon la revendication 1,
la variable de paramètre de système comprenant au moins le premier élément aléatoire, et
le dispositif (100) étant en outre configuré pour calculer la clé partagée (106) sur la base en outre du premier élément aléatoire.

4. Dispositif (100) selon l'une quelconque des revendications 1 à 3,
la variable de paramètre de système comprenant au moins le second élément aléatoire, et
le dispositif (100) étant en outre configuré pour calculer la clé partagée (106) sur la base en outre du second élément aléatoire, si *n* est plus petit qu'une limite supérieure *m* pour les participants (102) dans le groupe de participants (102), *m* étant un entier naturel.

5. Dispositif (100) selon l'une des revendications 1 à 4,
le dispositif (100) étant configuré pour utiliser sa clé partagée calculée (106) afin de chiffrer des données, avant de communiquer (402) les données chiffrées sur le réseau public (101) à un ou plusieurs autres participants (102) du groupe.

6. Dispositif (100) selon l'une des revendications 1 à 5,
le dispositif (100) étant configuré pour utiliser sa clé partagée calculée (106) afin de déchiffrer (403) des données reçues sur le réseau public (101) en provenance d'un autre participant (102).

7. Dispositif (100) selon l'une des revendications 1 à 6,
le dispositif (100) étant inscrit auprès de l'administrateur (103) de système avec une identité qui est unique dans le groupe de participants (102).

8. Dispositif (100) selon l'une des revendications 1 à 7,
le dispositif (100) étant configuré pour calculer la clé partagée (106) sur la base en outre d'identités uniques de tous les participants (102) du groupe.

9. Système (110) de communication sécurisée de données sur un réseau public (101), le système (110) comportant
un groupe de *n* participants (102), chaque participant (102) étant de préférence un serveur ou un client connecté au réseau public (101), et *n* étant un entier naturel, où *n* > 2, et
un administrateur (103) de système,
chaque participant (102) étant configuré pour calculer une paire de clés incluant une clé secrète (104) et une clé publique (105) sur la base d'une fonction cryptographique (400) fournie par l'administrateur (103) de système à chaque participant (102) du groupe, et
chaque participant (102) étant configuré pour calculer une clé partagée (106) sur la base de sa clé secrète (104), des clés publiques (105) de tous les participants (102) du groupe, et d'une application *n*-multilinéaire nMAP (401) fournie par l'administrateur (103) de système à chaque participant (102) du groupe ;
dans lequel :
la fonction cryptographique (400) et l'application *n*-multilinéaire (401) sont comprises dans une variable de paramètre de système,
la variable de paramètre de système comprend en outre un ensemble de *n* valeurs aléatoires, un premier élément aléatoire S et un second élément aléatoire Φ ;
chaque participant (102) étant en outre configuré pour calculer sa clé publique (105) sur la base en outre de l'ensemble de *n* valeurs aléatoires ;
chaque participant (102) étant en outre configuré pour calculer la paire de clés sur la base de la fonction cryptographique (400) en obtenant une paire de clés à long terme en exécutant un algorithme de génération de clés GNIKE.KGen(*pms*, ID*_{Â}ᵢ* ), *pms* étant la variable de paramètre de système qui comporte en outre l'application *n-*multilinéaire nMAP (401), l'ensemble de *n* valeurs aléatoires, le premier élément aléatoire, le second élément aléatoire et la fonction cryptographique (400), et ID*_{Â}ᵢ* étant une identité du participant *Âᵢ* ; et
chaque participant (102) étant en outre configuré pour calculer une clé partagée (106) comme ${K}_{{ID}_{{\hat{A}}_{i , … , n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n} *},S\right)}^{{sk}_{{ID}_{{\hat{A}}_{i}}}}$ pour *n*=n,* ou comme ${K}_{{ID}_{{\hat{A}}_{i , … n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ pour 2<n*<n, ${sk}_{{ID}_{{\hat{A}}_{i}}}$ étant la clé secrète (104) pour le participant *Âᵢ* indiqué par l'identité ID*_{Âᵢ}*, ${Z}_{{}_{{\hat{A}}_{i}}} : = {g}^{{α}_{{\hat{A}}_{i}}}$*,* ${α}_{{\hat{A}}_{i}} {←}^{$} {Z}_{p}^{∗}$, g étant un générateur d'un groupe G, l'application *n*-multilinéaire nMAP étant définie sur Gⁿ et nMAP (g,..., g) étant le générateur d'un groupe du même ordre que G.

10. Système (110) selon la revendication 9,
l'administrateur (103) de système étant au moins un serveur (201) ou au moins un client (200) connecté au réseau public (101), et étant de préférence au moins un des participants (102) du groupe.

11. Système (110) selon la revendication 9 ou 10,
l'administrateur (103) de système étant configuré pour définir une limite supérieure *m* pour les participants (102) dans le groupe de participants (102), *m* étant un entier naturel.

12. Procédé (300) de communication sécurisée de données sur un réseau public (101), le procédé (300) comportant
le calcul (301), par un dispositif (100) qui est un participant (102) d'un groupe de *n* participants (102), d'une paire de clés incluant une clé secrète (104) et une clé publique (105) sur la base d'une fonction cryptographique (400) reçue en provenance d'un administrateur (103) de système, un participant (102) étant de préférence un serveur ou un client connecté au réseau public (101), et *n* étant un entier naturel, où *n* > 2, et
le calcul (302), par le dispositif (100), d'une clé partagée (106) sur la base de sa clé secrète (104), des clés publiques (105) de tous les participants (102) du groupe, et d'une application *n*-multilinéaire nMAP (401) reçue en provenance de l'administrateur (103) de système ;
dans lequel :
la fonction cryptographique (400) et l'application *n*-multilinéaire nMAP (401) sont comprises dans une variable de paramètre de système,
la variable de paramètre de système comprend en outre un ensemble de *n* valeurs aléatoires, un premier élément aléatoire S et un second élément aléatoire Φ ;
le calcul, par le dispositif (100), de sa clé publique (105) sur la base en outre de l'ensemble de *n* valeurs aléatoires ;
le calcul, par le dispositif (100), de la paire de clés sur la base de la fonction cryptographique (400) comportant : l'obtention, par le dispositif (100), d'une paire de clés à long terme pour un participant Ai du groupe de participants (102) en exécutant un algorithme de génération de clés GNIKE.KGen(*pms*, ID*_{Â}ᵢ*), *pms* étant la variable de paramètre de système qui comporte en outre l'application *n*-multilinéaire nMAP (401), l'ensemble de *n* valeurs aléatoires, le premier élément aléatoire, le second élément aléatoire et la fonction cryptographique (400), et ID*_{Â}ᵢ* étant une identité du participant *Âᵢ* ; et
le calcul (302), par le dispositif (100), d'une clé partagée (106) sur la base de sa clé secrète (104), des clés publiques (105) de tous les participants (102) du groupe, et d'une application *n*-multilinéaire (401) reçue en provenance de l'administrateur (103) de système comportant : le calcul, par le dispositif (100), de la clé partagée (106) comme ${K}_{{ID}_{{\hat{A}}_{i , … n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},S\right)}^{{sk}_{{ID}_{{\hat{A}}_{i}}}}$ pour *n*=n,* ou comme ${K}_{{ID}_{{\hat{A}}_{i , … n *}}} = nMAP {\left({Z}_{{\hat{A}}_{1}},…,{Z}_{{\hat{A}}_{i - 1}},{Z}_{{\hat{A}}_{i + 1}},…,{Z}_{{\hat{A}}_{n *}},Φ,…,Φ,S\right)}^{{sk}_{{ID}_{{\hat{A}}_{i}}}}$ pour 2<n*<n, ${sk}_{{ID}_{{\hat{A}}_{i}}}$ étant la clé secrète (104) pour le participant *Âᵢ* indiqué par l'identité, ${Z}_{{\hat{A}}_{i}} : = {g}^{{α}_{{\hat{A}}_{i}}} , {α}_{{\hat{A}}_{i}} {←}^{$} {Z}_{p}^{∗}$, g étant un générateur d'un groupe G, l'application *n*-multilinéaire nMAP étant définie sur Gⁿ et nMAP (g,..., g) étant le générateur d'un groupe du même ordre que G.

13. Produit-programme d'ordinateur comportant des instructions qui, lorsqu'elles sont exécutées par un ordinateur, amènent l'ordinateur à réaliser les étapes du procédé (300) selon la revendication 12.
